# EUROPEAN PATENT SPECIFICATION

(11) **EP 0 495 868 B1**
(45) Date of publication and mention of the grant of the patent: **21.09.1994**
(21) Application number: 90915512.9
(22) Date of filing: 12.10.1990
(51) Int. Cl.: B60B 33/02

(54) **STEERING UNIT**
STEUERUNGSEINHEIT
APPAREIL DE GUIDAGE

(30) Priority: 14.10.1989 GB 8923204; 22.11.1989 GB 8926386
(43) Date of publication of application: 29.07.1992
(73) Proprietor: LOVIE, Michael, Alexander, Aberdeenshire AB5 9NT (GB); GRANTHAM, John, Aberdeenshire AB5 9NT (GB)
(72) Inventor: GRANTHAM, John North Aquithie, Aberdeenshire AB51 9NY (GB)
(74) Representative: Pacitti, Pierpaolo A.M.E.
(86) International application number: GB9001580
(87) International publication number: WO9105672

(56) References cited:
- DE-A- 2 847 957
- FR-A- 2 580 551
- US-A- 1 861 919
- US-A- 4 731 899

## Description

This invention relates to a steering unit.

A number of factors are considered in the design of shopping trolleys such as: trolley width in relation to aisle width, trolley stacking ability, normal ergonomic considerations and overall manoeuvrability. Unfortunately, the vast majority of trolleys do not manoeuvre with the ease and accuracy required by users. Even a trolley which, when unladen, functions as the user requires can become extremely difficult to operate when heavily laden. This is a particular problem when a trolley is taken across even the shallowest of slopes, normally on the way to car parks, where any sideway movement of the trolley can build in momentum resulting, in some cases, in the user losing complete control of the trolley.

Prior art document US-A-4731899 discloses a steering unit for a trolley with a rotary roller set directional control device. The device has a pivotal supporting arm which is attached to an upper portion of the device and which has a catch for locating in a slot in a lower portion of the device to prevent the relative rotation of the two portions.

According to the present invention there is provided a steering unit for a trolley, comprising first and second members, said first member adapted to be fixed on the trolley, said second member attachable to a wheel of the trolley and connected to said first member for rotation with respect to said first member, and means provided to lock the two members in a predetermined position under load.

Preferably, said second member is at least partially rotatable within said first member.

Preferably, said predetermined position is determined by the two members being shaped to interlock in said predetermined position.

Preferably, said first member comprises a hollow casing, attachable at one end to the trolley chassis and sealed at the other end to form a receptacle for the second member. Preferably, the casing is sealed with a releasable cap, the cap enabling access to the interior of the casing.

Preferably, said second member comprises a longitudinal member spring-loaded to bear against the first member when under load.

Preferably, the longitudinal member has a flange mounted upon it, said flange having grooves which are shaped to fit dogs provided on the receptacle, and so interlock the first and second members when engaged.

The longitudinal member may be spring-loaded by a helical spring attached to the sealed end of the receptacle and bearing against the longitudinal member.

Alternatively, the longitudinal member may be spring-loaded by a disc spring or a series of disc springs attached to the sealed end of the receptacle and bearing against the longitudinal member.

Most preferably, the position of the second member, once interlocked with the first member, ensures that the wheel to which the second member is attached is directed to run in a forward direction.

The trolley on which the steering unit is used may also have a shaped handle which extends across the rear of the trolley in a continuous curve and is positioned at an angle and distance that allows the standard stacking of such trolleys.

Preferably, an external force of approximately ten pounds is sufficient to overcome the repulsive force of the spring and cause the locking mechanism to contact the locating barrel.

An embodiment of the present invention will now be described, by way of example, with reference to the accompanying drawings in which:-
Fig. 1 is a perspective view of a steering unit in accordance with the present invention, attached to a trolley wheel;
Fig. 2 is a side view of the integral piston rod and locating barrel and the locking mechanism of the steering unit of Fig. 1;
Fig. 3 is a side view of a unidirectional piston rod and locating barrel and the locking mechanism of the steering unit of Fig. 1; and
Fig. 4 is a perspective view of a trolley with steering units of the present invention attached.

A steering unit 1 comprises a first member in the form of a casing 2, releasable cap 3, a second member provided as a longitudinal member in the form of a centrally mounted piston rod 4 housed within the casing 2, and locking means provided as a flange 5 with grooves 6, which may be interlocked with a collar 7 that has dogs 8 provided for this purpose.

A repulsive force in direction A is generated by a spring 9 located at the top of the piston rod 4. The piston rod 4 is secured in position above the collar 7 by a locking pin 10. The collar 7 is fixed to the casing 2.

A washer 11 is located above the locking pin 10, and the spring 9 acts between the washer 11 and the cap 3 attached to the top of the casing 2.

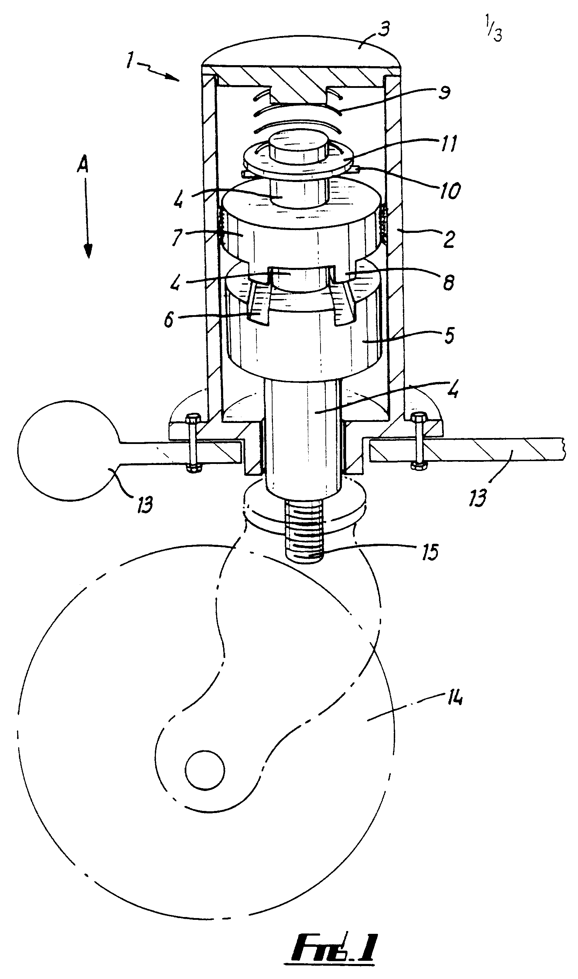

The spring 9 is shown in Fig. 1 as a coil spring, but this may be replaced by a disc spring or stack of disc springs which can fulfil the same function but reduces the overall length.

When in use, the casing 2 is bolted to the front of a shopping trolley 12 on its chassis 13, and a front wheel 14 of the trolley 12 is attached to a threaded section 15 at the base of the piston rod 4.

The trolley wheel 14 will swivel as normal when the trolley 12 is empty. However, when the weight of the load in the trolley 12 overcomes a predetermined value the force produced by the load will exceed the repulsive force produced by the spring 9 and the chassis 13 of the trolley 12 will lower, thus lowering the collar 7 onto the flange 5. This can occur irrespective of the position of the wheel 14 and consequent position of the attached flange 5, but when the wheel 14 is located in the forward or backward direction, dogs 8 on the collar 7 and grooves 6 in the flange 5 will be aligned and mate, thus locking the flange 5 in position and locking the wheel 14 in a position to roll forwards or backwards.

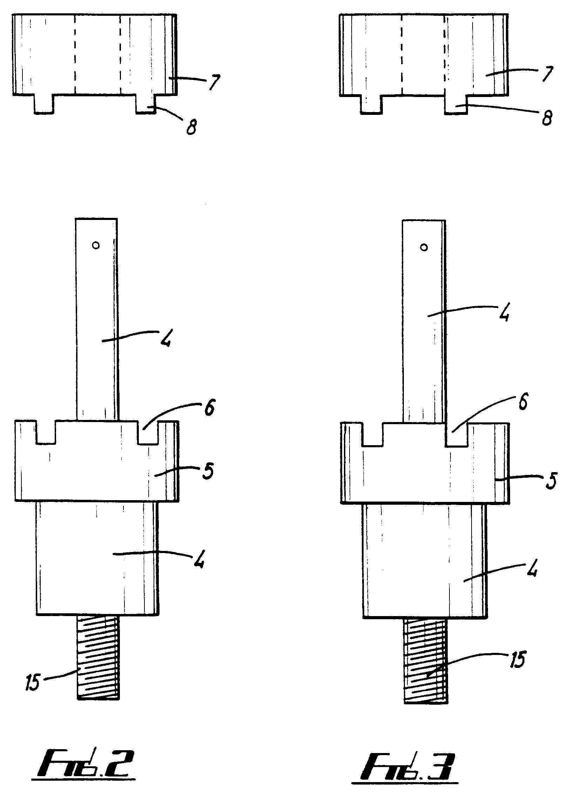

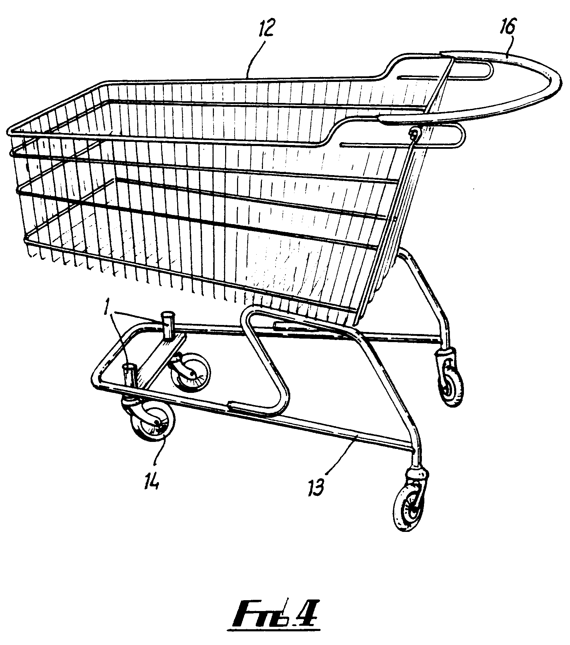

The symmetrical dog 8 and groove 6 arrangement illustrated in Fig. 2 enables the wheel 14 to be locked in a forward or a backward direction with respect to the trolley chassis 13, separated by 180^{o}, whereas the asymmetric positioning of the dogs 8 and grooves 6 illustrated in Fig. 3 enables the wheel 14 to be locked only in the forward travel direction, with respect to the trolley chassis 13, where the majority of the wheel 14 is positioned behind the piston rod 4.

Thus the trolley 12 will be compelled to move forward, under a user's direction, and will not move at a tangent under the laden trolley's own momentum, even when traversing very steep slopes.

Two steering units 1 are shown attached to the chassis 13 of a trolley 12 in Fig. 4. The trolley 12 has a handle 16 which is a continuous curve. The distance to which the handle 16 extends from the body of the trolley is limited to a size suitable to allow stacking of such trolleys end-to-end in the usual linear fashion.

When loaded, the weight of the trolley 12 bears upon the steering unit 1 and the wheels 14 swivel with the piston rod 4, until the grooves 6 engage the dogs 8 to fix the wheels 14 in a forward position.

The locked wheel 14 will not deviate from the desired direction by more than one degree. However, should the user wish to release the locked wheel 14, this can be accomplished simply by raising the front of the trolley 12 or pressing down on the trolley handle 16 which is to the rear of the chassis 8, so that the front of the trolley 12 is raised slightly, thus separating the collar 7 and flange 5. Similarly, the wheels 14 unlock when the front of the laden trolley 12 is "snatched" sideways.

The steering unit 1 may be manufactured in any suitable material such as metals or plastics or any combination of these as desired.

The operating handle 16 of the trolley 12 with the steering unit 1 attached is curved to aid steering of the trolley and is more comfortable to use by being ergonomically suitable.

## Claims

1. A steering unit (1) for a trolley (12), comprising first and second members, said first member (2) adapted to be fixed on the trolley (12), said second member (4) attachable to a wheel (14) of the trolley (12) and connected to said first member (2) for rotation with respect to said first member (2), characterised in that means (7,5) are provided to lock the two members (2,4) in a predetermined position under load, resulting from loading of the trolley (12).

2. A steering unit (1) for a trolley (12) as claimed in Claim 1, wherein said second member (4) is at least partially disposed within said first member (2).

3. A steering unit (1) for a trolley (12) as claimed in Claims 1 or 2, wherein said predetermined position is determined by the two members (2,4) being shaped to interlock in said predetermined position.

4. A steering unit (1) for a trolley (12) as claimed in any one of Claim 1 to 3, wherein said first member (2) comprises a hollow casing, attachable at one end to the trolley chassis (13) and sealed at the other end to form a receptacle for the second member (4).

5. A steering unit (1) for a trolley (12) as claimed in Claims 1 to 4, wherein said second member (4) comprises a longitudinal member spring-loaded to bear against the first member (2) when under load.

6. A steering unit (1) for a trolley (12) as claimed in Claim 5, wherein the longitudinal member (4) has a flange (5) mounted upon it, said flange (5) having grooves (6) which are shaped to fit dogs (8) provided on the receptacle, and so interlock the first (2) and second (4) members when engaged.

7. A steering unit (1) for a trolley (12) as claimed in Claim 5, wherein the longitudinal member (4) is spring-loaded by a helical spring (9) attached to the sealed end (3) of the receptacle and bearing against the longitudinal member (4).

8. A steering unit (1) for a trolley (12) as claimed in Claim 5, wherein the longitudinal member (4) is spring-loaded by a disc spring (9) attached to the sealed end (3) of the receptacle and bearing against the longitudinal member (4).

9. A steering unit (1) for a trolley (12) as claimed in any one of Claims 4 to 8, wherein the casing (2) is sealed by a releasable cap (3) to provide access to the interior of the casing (2).

10. A steering unit (1) for a trolley (12) as claimed in any preceding Claim, wherein the position of the second (4) member, once interlocked with the first member (2), ensures that the wheel (14) to which the second member (4) is attached is directed to run in a forward direction.

11. A trolley (12) comprising a chassis (13) and handle (16) and front wheels (14) each having a steering unit (11) as defined in any preceding Claim.

12. A trolley (12) as claimed in Claim 10, wherein the handle (16) extends across the rear of the trolley (12) in a continuous curve and it positioned at an angle and distance which allows the standard stacking of such trolleys (12).

## Patentansprüche

1. Eine Lenkeinheit (1) für einen Wagen (12), mit ersten und zweiten Teilen, wobei das erste Teil (2) dazu eingerichtet ist, an dem Wagen (12) befestigt zu sein, das zweite Teil (4) an einem Rad (14) des Wagens (12) anbringbar und mit dem ersten Teil (2) zur Drehung bezüglich des ersten Teils (2) verbunden ist, dadurch gekennzeichnet, daß Einrichtungen (7, 5) vorgesehen sind, um die beiden Teile (2, 4) in einer vorbestimmten Stellung unter einer aus dem Beladen des Wagens (12) resultierenden Last zu verriegeln.

2. Eine Lenkeinheit (1) für einen Wagen (12) nach Anspruch 1, bei dem das zweite Teil (4) wenigstens teilweise in dem ersten Teil (2) angeordnet ist.

3. Eine Lenkeinheit (1) für einen Wagen (12) nach einem der Ansprüche 1 oder 2, bei dem die vorbestimmte Stellung durch die beiden Teile (2, 4) bestimmt ist, die zum miteinander Verriegeln in der vorbestimmten Stellung geformt sind.

4. Eine Lenkeinheit (1) für einen Wagen (12) nach einem der Ansprüche 1 bis 3, bei dem das erste Teil (2) ein hohles Gehäuse aufweist, das an einem Ende des Wagengestells (13) anbringbar ist und an dem anderen Ende verschlossen ist um eine Aufnahme für das zweite Teil (4) zu bilden.

5. Eine Lenkeinheit (1) für einen Wagen (12) nach einem der Ansprüche 1 bis 4, bei dem das zweite Teil (4) ein längliches federbelastetes Teil aufweist, das unter Last gegen das erste Teil (2) anliegt.

6. Eine Lenkeinheit (1) für einen Wagen (12) nach Anspruch 5, bei dem das längliche Teil (4) einen Flansch (5) daran angeordnet aufweist, wobei der Flansch (5) Nuten (6) aufweist, die so geformt sind, daß sie mit Mitnehmern (8) zusammenpassen, die an der Aufnahme vorgesehen sind, um so das erste (2) und das zweite (4) Teil miteinander zu verriegeln, wenn diese in Eingriff stehen.

7. Eine Lenkeinheit (1) für einen Wagen (12) nach Anspruch 5, bei dem das längliche Teil (4) durch eine Schraubenfeder (9) federbelastet ist, die an dem verschlossenen Ende der Aufnahme angeordnet ist und gegen das längliche Teil (4) anliegt.

8. Eine Lenkeinheit (1) für einen Wagen (12) nach Anspruch 5, bei dem das längliche Teil (4) durch eine Tellerfeder (9) federbelastet ist, die an dem verschlossenen Ende (3) der Aufnahme angeordnet ist und gegen das längliche Teil (4) anliegt.

9. Eine Lenkeinheit (1) für einen Wagen (12) nach einem der Ansprüche 4 bis 8, bei der das Gehäuse (2) durch eine lösbare Kappe (3) verschlossen ist, um Zugang zu dem Inneren des Gehäuses zu ermöglichen.

10. Eine Lenkeinheit (1) für einen Wagen (12) nach einem der vorhergehenden Ansprüche, bei dem die Position des zweiten Teiles (4), wenn es mit dem ersten Teil (2) verriegelt ist, sicherstellt, daß das Rad (14), mit dem das zweite Teil (4) verbunden ist, so ausgerichtet ist, daß es in eine Vorwärtsrichtung läuft.

11. Ein Wagen (12) mit einem Rahmen (13) und einem Handgriff (16) sowie Vorderrädern (14), die jeweils eine Lenkeinheit (11) aufweisen, wie sie in jedem der vorhergehenden Ansprüche definiert ist.

12. Ein Wagen (12) nach Anspruch 10, bei dem der Handgriff (16) sich über das hintere Ende des Wagens (12) in einer kontinuierlichen Krümmung erstreckt und in einem Winkel und Abstand angeordnet ist, der die übliche Stapelung derartiger Wägen (12) erlaubt.

## Revendications

1. Organe de direction (1) pour un chariot de supermarché (12), comprenant des premier et deuxième éléments, ledit premier élément (2) étant conçu pour être fixé sur le chariot (12), ledit deuxième élément (4) pouvant être fixé à une roue (14) du chariot (12) et étant relié audit premier élément (2) pour tourner par rapport audit premier élément (2), caractérisé en ce que des moyens (7, 5) sont prévus pour verrouiller les deux éléments (2, 4) dans une position prédéterminée sous charge, par suite du chargement du chariot (12).

2. Organe de direction (1) pour un chariot (12) selon la revendication 1, dans lequel ledit deuxième élément (4) est au moins partiellement disposé à l'intérieur dudit premier élément (2).

3. Organe de direction (1) pour un chariot (12) selon les revendications 1 ou 2, dans lequel ladite position prédéterminée est déterminée par les deux éléments (2, 4) conformés pour se verrouiller mutuellement dans ladite position prédéterminée.

4. Organe de direction (1) pour un chariot (12) selon l'une quelconque des revendications 1 à 3, dans lequel ledit premier élément (2) comprend un boîtier creux, pouvant être relié à une extrémité au châssis (13) du chariot et étant obturé à l'autre extrémité pour former un réceptacle pour le deuxième élément (4).

5. Organe de direction (1) pour un chariot (12) selon les revendication 1 à 4, dans lequel ledit deuxième élément (4) comprend un élément longitudinal chargé par ressort pour porter contre le premier élément une fois sous charge.

6. Organe de direction (1) pour un chariot (12) selon la revendication 5, dans lequel un épaulement (5) est disposé sur l'élément longitudinal (4), ledit épaulement (5) présentant des gorges (6) qui sont conformées pour recevoir des griffes (8) prévues sur le réceptacle, et verrouillent ainsi mutuellement les premier (2) et deuxième (4) éléments quand ils sont en prise.

7. Organe de direction (1) pour un chariot (12) selon la revendication 5, dans lequel l'élément longitudinal (4) est chargé par ressort par un ressort hélicoïdal (9) relié à l'extrémité obturée (3) du réceptacle et portant contre l'élément longitudinal (4).

8. Organe de direction (1) pour un chariot (12) selon la revendication 5, dans lequel l'élément longitudinal (4) est chargé par ressort par un ressort à disques (9) relié à l'extrémité obturée (3) du réceptacle et portant contre l'élément longitudinal (4).

9. Organe de direction (1) pour un chariot (12) selon l'une quelconque des revendications 4 à 8, dans lequel le boîtier (2) est obturé par un capuchon détachable (3) pour donner accès à l'intérieur du carter (2).

10. Organe de direction (1) pour un chariot (12) selon l'une quelconque des revendications précédentes, dans lequel la position du deuxième (4) élément, une fois verrouillé mutuellement avec le premier élément (2), assure que la roue (14) à laquelle le deuxième élément (4) est fixé est dirigée pour rouler vers l'avant.

11. Chariot (12) comprenant un châssis (13) et une poignée (16) et des roues avant (14) comprenant chacune un organe de direction (11) selon l'une quelconque des revendications précédentes.

12. Chariot (12) selon la revendication 10, dans lequel la poignée (16) s'étend sur tout l'arrière du chariot (12) suivant une courbe continue et elle est positionnée à un angle et une distance qui permettent l'emboîtement normalisé de tels chariots (12).
